# EUROPEAN PATENT APPLICATION

(11) **EP 4 797 772 A1**
(43) Date of publication of application: **26.08.2026**
(21) Application number: 24887821.7
(22) Date of filing: 29.10.2024
(51) Int. Cl.: H04W 24/02, H04L 67/51

(54) **COMMUNICATION METHOD AND APPARATUS**

(30) Priority: 09.11.2023 CN 202311493334
(71) Applicant: HUAWEI TECHNOLOGIES CO., LTD., Shenzhen 518129 (CN)
(72) Inventor: WANG, Junfan, Shenzhen, Guangdong 518129 (CN); YAN, Xueqiang, Shenzhen, Guangdong 518129 (CN); XI, Yan, Shenzhen, Guangdong 518129 (CN); ZHAO, Mingyu, Shenzhen, Guangdong 518129 (CN)
(74) Representative: Thun, Clemens
(86) International application number: PCT/CN2024/128271
(87) International publication number: WO 2025/098209

(57) **Abstract**

This application discloses a communication method and apparatus. The method is applied to a first network element and includes: receiving a first request from a second network element, where the first request includes an analytics identifier and is used to request the first network element to provide an analytics service corresponding to the analytics identifier; and sending first information to a third network element, where the third network element is determined by the first network element based on second information, the first information is used to request the third network element to perform the analytics service, and the second information includes one or more of the following: location information of the third network element, capability information of the third network element, or load level information of the third network element. In this application, the first network element selects, based on one or more of location, capability, or load of a network element, a network element capable of performing the analytics service. This ensures that the selected third network element can better perform the analytics service, thereby improving both the success rate and efficiency of analytics.

## Description

### CROSS-REFERENCE TO RELATED APPLICATIONS

This application claims priority to Chinese Patent Application No. 202311493334.2, filed with the China National Intellectual Property Administration on November 9, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With the development of communication technologies, the 3rd generation partnership project (3rd generation partnership project, 3GPP) has introduced the network data analytics function (network data analytics function, NWDAF) network element. A network function (network function, NF) network element or an application function (application function, AF) network element may request the NWDAF network element to perform an analytics service to obtain an analytics result. The NF network element or the AF network element may determine, based on an analytics identifier (analytics identifier, analytics ID) corresponding to the analytics service, the NWDAF network element to be used to perform the analytics service. The NWDAF network element then collects data from the NF network element or the AF network element, performs the analytics service based on the collected data, and returns the analytics result to the NF network element or the AF network element for performing subsequent processing.

However, the NWDAF network element determined based on the analytics identifier may be unable to perform the analytics service. For example, the NWDAF network element may be heavily loaded or have insufficient capability, resulting in low analytics efficiency or even analytics failure.

### SUMMARY

Embodiments of this application provide a communication method and apparatus to improve analytics efficiency.

According to a first aspect, an embodiment of this application provides a communication method. The method may be applied to a first network element or a chip in the first network element. For example, the method is applied to the first network element. The method includes: receiving a first request from a second network element, where the first request includes an analytics identifier, and the first request is used to request the first network element to provide an analytics service corresponding to the analytics identifier; and sending first information to a third network element, where the third network element is determined by the first network element based on second information, the first information is used to request the third network element to perform the analytics service, and the second information includes one or more of location information of the third network element, capability information of the third network element, or load level information of the third network element.

In this embodiment of this application, after receiving the first request from the second network element, the first network element may select, based on the second information, a network element configured to perform the analytics service, for example, select the third network element. The second information may include one or more of the location information, the capability information, or the load level information of the third network element, that is, the first network element selects, based on one or more of the following: location, capability, or load of a network element, a network element capable of performing the analytics service, so that the selected third network element can better perform the analytics service, thereby improving both the success rate and efficiency of analytics.

In a possible implementation, the second information includes the capability information of the third network element, and the capability information indicates that the third network element has a capability of performing the analytics service.

In this implementation, when selecting the third network element for performing the analytics service, the first network element can select, based on the capability information of the third network element, the third network element that has a capability of performing the analytics service. For example, if a model for performing the analytics service is a model 1, and the third network element can train and deploy the model 1, the third network element has the capability of performing the analytics service, and the first network element may select the third network element to perform the analytics service, thereby improving an analytics success rate.

In a possible implementation, the second information includes load level information of the third network element, where the load level information indicates that a load of the third network element is less than or equal to a first threshold, or the load level information indicates that a load of the third network element is less than a load of at least one network element, and the at least one network element is a candidate network element that supports performing the analytics service.

In this implementation, when selecting the third network element for performing the analytics service, the first network element can select, based on the load level information of the third network element, the third network element that supports performing the analytics service. For example, the first network element may select a network element (for example, the third network element) whose load is less than or equal to the first threshold to perform the analytics service. A load of a network element is a ratio of compute resources used by the network element to total compute resources of the network element. The first threshold may be a default value, a value set by the first network element, or a value preconfigured in the first network element. The first threshold may be related to the analytics service. For example, different analytics services are corresponding to their respective thresholds, and thresholds corresponding to different analytics services may be the same or different. Alternatively, the first threshold may be unrelated to the analytics service. For example, thresholds corresponding to different analytics services are all the first threshold. If a load of a network element is less than the first threshold, it indicates that a compute resource of the network element can support execution of the analytics service. Therefore, this selection manner facilitates selection of an appropriate network element. For example, if the first threshold is 60%, and a load of a network element 1 is 50%, the first network element may select the network element 1 to perform the analytics service. Optionally, if there are a plurality of candidate network elements whose loads are less than the first threshold, the first network element may randomly select one of them to perform the analytics service, or the first network element may select a network element with the smallest load among the candidate network elements to perform the analytics service. Alternatively, no threshold may be set, and the first network element may select a network element with the smallest load among the at least one candidate network element to perform the analytics service. For example, if a load of a network element 1 is 50%, a load of a network element 2 is 60%, and a load of a network element 3 is 70%, the first network element may select the network element 1 to perform the analytics service. When a load of a network element is relatively low, the network element may perform the analytics service with higher efficiency, thereby improving execution efficiency of the analytics service.

In a possible implementation, that the first information is used to request the third network element to perform the analytics service includes: the first information includes a first identifier, and the first identifier indicates a model for performing the analytics service.

In this implementation, the first network element can select a model that matches the analytics service, and implicitly request, by indicating, to the third network element, the model that matches the analytics service, the third network element to perform the analytics service. Signaling overheads are reduced because no additional signaling is needed to request the third network element to perform the analytics service. In addition, the third network element can perform the analytics service by using the model that matches the analytics service, thereby improving analytics efficiency.

In a possible implementation, the first information includes information about a first transmission protocol for performing the analytics service, and the first transmission protocol is used for data transmission between the third network element and the second network element.

The first transmission protocol is, for example, selected by the first network element. In other words, in this implementation, the first network element can select a transmission protocol used for data transmission between the third network element and the second network element. Compared with a solution in which data is transmitted between the third network element and the second network element based on a fixed transmission protocol (for example, a transmission control protocol (transmission control protocol, TCP)), when the fixed transmission protocol is used, due to a feature of the transmission protocol, a case in which a transmission delay is large may exist when data related to some services is transmitted. For example, when machine learning-related data is transmitted between the third network element and the second network element based on the TCP, network congestion is easily caused because an amount of the machine learning-related data may be large. The TCP adjusts a transmission rate based on a network congestion degree, and the transmission rate may be low when the network congestion is severe. Consequently, a transmission delay is large. However, this embodiment of this application is flexible, and a transmission protocol does not need to be fixed, but may be selected by the first network element. For example, when selecting a transmission protocol used for data transmission between the third network element and the second network element, the first network element may select a transmission protocol that corresponds to a small transmission delay obtained when to-be-transmitted data between the third network element and the second network element is transmitted (in other words, a transmission protocol that does not reduce network congestion by adjusting a transmission rate), thereby improving data transmission efficiency.

In a possible implementation, the first transmission protocol is determined, based on a type of data to be transmitted between the third network element and the second network element, from transmission protocols supported by the third network element and the second network element.

In this implementation, due to a feature of the transmission protocol, a case in which a transmission delay is large may exist when data related to some services is transmitted, and the first network element can flexibly select, based on a type of data (for example, artificial intelligence-related data, machine learning-related data, and federated learning-related data) transmitted between the third network element and the second network element, a transmission protocol (for example, the first transmission protocol) used for data transmission between the third network element and the second network element. For example, when the machine learning-related data (for example, an analytics result obtained by the third network element by performing the analytics service) is transmitted between the third network element and the second network element, network congestion is not reduced by adjusting a transmission rate when an analytics result is transmitted based on quick user datagram protocol (user datagram protocol, UDP) internet connections (quick UDP internet connections, QUIC). Therefore, a transmission delay corresponding to the transmission of the analytics result based on the QUIC is smaller than a transmission delay corresponding to transmission of the analytics result based on a TCP. Therefore, the first network element may select to transmit the analytics result based on the QUIC between the third network element and the second network element, thereby improving data transmission efficiency.

In a possible implementation, the third network element includes a plurality of network elements, the first information includes information about at least two transmission protocols for performing the analytics service, one of the at least two transmission protocols is used for data transmission between any two network elements among the plurality of network elements, and the another network element belongs to the plurality of network elements.

The at least one transmission protocol is, for example, selected by the first network element. In other words, in this implementation, the first network element can select a transmission protocol used for data transmission between any two network elements included in the third network element. Compared with a solution in which data is transmitted between any two network elements included in the third network element based on a fixed transmission protocol (for example, a TCP), due to a feature of the transmission protocol, a case in which a transmission delay is large may exist when data related to some services is transmitted. For example, when the federated learning-related data is transmitted between any two network elements included in the third network element based on the TCP, network congestion is easily caused because the amount of federated learning-related data may be large. The TCP adjusts a transmission rate based on a network congestion degree, and the transmission rate may be low when the network congestion is severe. Consequently, a transmission delay is large. However, this embodiment of this application is flexible, and a transmission protocol does not need to be fixed, but may be selected by the first network element. For example, when selecting a transmission protocol used for data transmission between any two network elements included in the third network element, the first network element can select a transmission protocol that corresponds to a small transmission delay obtained when to-be-transmitted data between any two network elements included in the third network element is transmitted (in other words, a transmission protocol that does not reduce network congestion by adjusting a transmission rate), thereby improving data transmission efficiency.

In a possible implementation, the transmission protocol is determined, based on a type of the data to be transmitted between the any two network elements, from transmission protocols supported by the any two network elements.

In this implementation, due to a feature of the transmission protocol, a case in which a transmission delay is large may exist when data related to some services is transmitted, and the first network element can flexibly select, based on a type of data transmitted between the any two network elements included in the third network element (for example, artificial intelligence-related data, machine learning-related data, and federated learning-related data), a transmission protocol used for data transmission between the any two network elements included in the third network element. For example, the third network element includes a network element 1, a network element 2, and a network element 3. When the federated learning-related data (for example, data 1 generated by the network element 1 and the network element 2 in a model training process) is transmitted between the network element 1 and the network element 2, network congestion is not reduced by adjusting a transmission rate when the data 1 is transmitted based on a loss tolerant transmission protocol (loss tolerant transmission protocol, LTP). Therefore, a transmission delay corresponding to the transmission of the data 1 based on the LTP is smaller than a transmission delay corresponding to transmission of the data 1 based on a TCP, and a part of data is allowed to be lost during the process of the data 1. Therefore, the first network element can select to transmit the data 1 between the network element 1 and the network element 2 based on the LTP. Alternatively, when the federated learning-related data (for example, data 2 of a model obtained through training by the network element 1 and the network element 2) is transmitted between the network element 2 and the network element 3, network congestion is reduced by adjusting a transmission rate when the data 2 is transmitted based on QUIC. Therefore, a transmission delay corresponding to the transmission of the data 2 based on the QUIC is smaller than a transmission delay corresponding to transmission of the data 2 based on a TCP, and no part of data is allowed to be lost during the process of transmitting the data 2. Therefore, the first network element may select to transmit the data 2 between the network element 2 and the network element 3 based on the QUIC, thereby improving data transmission efficiency.

In a possible implementation, the first information further indicates one or more of the following: training the model indicated by the first identifier; deploying the model obtained through training by the third network element, and performing the analytics service based on the model obtained through training by the third network element; or storing the model obtained through training by the third network element.

In this implementation, when selecting the third network element that performs the analytics service, the first network element can further determine related information (for example, how to train the model for performing the analytics service before performing the analytics service) used when the third network element performs the analytics service, and the information matches the analytics service and the third network element, so that the third network element can perform the analytics service with reference to the information, thereby improving efficiency of performing the analytics service.

In a possible implementation, the method further includes: receiving the second information from a network repository function network element. In this implementation, the first network element may obtain the second information by interacting with the network repository function network element, and does not need to prestore the second information. Therefore, storage space of the first network element can be saved.

In a possible implementation, the second network element includes an application function network element and/or a network exposure function network element, and may also include another network element. This is not limited herein.

In a possible implementation, the third network element includes one or more of a network data analytics function network element, a data collection coordination function network element, or an analytics data repository function network element, and may also include another network element. This is not limited herein. Optionally, if the third network element includes a plurality of network elements, the plurality of network elements may be network elements of a same type, for example, all network elements are network data analytics function network elements; or the plurality of network elements may include network elements of different types, for example, include a network data analytics function network element and a data collection coordination function network element. This is not limited herein.

According to a second aspect, an embodiment of this application provides a communication apparatus, including a processor and a memory. The memory is configured to store computer instructions, and when the apparatus runs, the processor executes the computer instructions stored in the memory, to enable the apparatus to perform any one of the implementation methods in the first aspect. The memory may be a volatile or nonvolatile memory, for example, a cache in a semiconductor chip.

According to a third aspect, an embodiment of this application provides a communication apparatus. The apparatus may be a first network element, or may be a chip used in the first network element. The apparatus has a function of implementing any one of the implementation methods in the first aspect. The function may be implemented by hardware, or may be implemented by hardware executing corresponding software. The hardware or the software includes one or more modules corresponding to the function.

According to a fourth aspect, an embodiment of this application provides a communication apparatus, including a unit or a means (means) configured to perform steps of any one of the implementation methods in the first aspect.

According to a fifth aspect, an embodiment of this application provides a communication apparatus, including a processor and an interface circuit. The processor is configured to communicate with another apparatus through the interface circuit, and perform any one of the implementation methods in the first aspect. The processor may be one or more processors.

According to a sixth aspect, an embodiment of this application provides a communication apparatus, including a processor coupled to a memory. The processor is configured to invoke a program stored in the memory, to perform any one of the implementation methods in the first aspect. The memory may be located inside or outside the apparatus. The processor may alternatively be one or more processors.

According to a seventh aspect, an embodiment of this application further provides a computer-readable storage medium. The computer-readable storage medium stores instructions, and when the instructions are run on a communication apparatus, any one of the implementation methods in the first aspect is enabled to be performed.

According to an eighth aspect, an embodiment of this application further provides a computer program product. The computer program product includes a computer program or instructions. When the computer program or the instructions are run by a communication apparatus, any one of the implementation methods in the first aspect is performed.

According to a ninth aspect, an embodiment of this application further provides a chip system, including a processor configured to perform any one of the implementation methods in the first aspect.

According to a tenth aspect, an embodiment of this application further provides a communication system. The system includes a first network element, configured to perform any one of the implementation methods performed by the first network element in the first aspect.

In a possible implementation, the system further includes: a second network element, configured to perform any one of the implementation methods performed by the second network element in the first aspect; and a third network element, configured to perform any one of the implementation methods performed by the third network element in the first aspect.

### BRIEF DESCRIPTION OF DRAWINGS

FIG. 1 is a diagram of a possible communication system;
FIG. 2 is a diagram of data collection by an NWDAF network element;
FIG. 3 is a diagram of model training and data analytics performed by an NWDAF network element;
FIG. 4 is a diagram of another possible communication system;
FIG. 5 is a flowchart of a communication method;
FIG. 6 is a flowchart of another communication method;
FIG. 7 is a flowchart of still another communication method;
FIG. 8 is a flowchart of yet another communication method;
FIG. 9 is a diagram of interaction between network elements;
FIG. 10 is a diagram of a communication apparatus 1000; and
FIG. 11 is a diagram of another communication apparatus 1100.

### DESCRIPTION OF EMBODIMENTS

The following describes in detail embodiments of this application with reference to the accompanying drawings.

The technical solutions in embodiments of this application may be applied to various communication systems, for example, a long term evolution (long term evolution, LTE) system, an LTE-advanced (LTE-advanced, LTE-A) system, a universal mobile telecommunications system (universal mobile telecommunications system, UMTS), and a 5th generation (5th generation, 5G) mobile communication system, a beyond 5G (beyond 5G, B5G) mobile communication system, a communication system evolved after 5G such as a 6th generation (6th generation, 6G) mobile communication system, and the like. Alternatively, the communication system may be a device-to-device (device-to-device, D2D) network, a wireless fidelity (wireless fidelity, Wi-Fi) network, a machine-to-machine (machine-to-machine, M2M) network, an internet of things (internet of things, IoT) network, or another network.

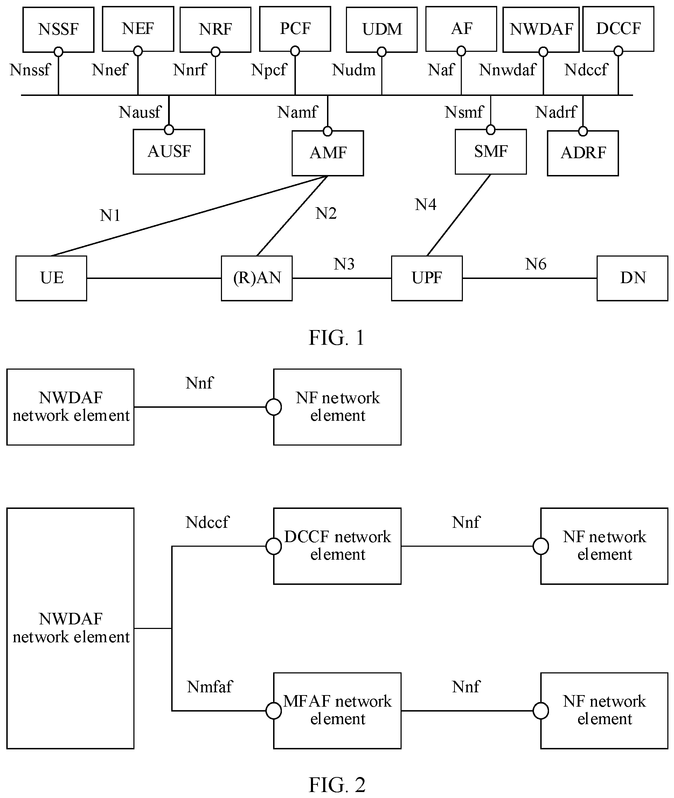

FIG. 1 is a diagram of a possible communication system. The communication system shown in FIG. 1 is a communication system based on a service-based architecture (service-based architecture, SBA), and may include three parts: a user equipment (user equipment, UE) part, a data network (data network, DN) part, and an operator network part.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an AF network element, an access and mobility management function (access and mobility management function, AMF) network element, a policy control function (policy control function, PCF) network element, a (radio) access network (radio access network, (R)AN), a user plane function (user plane function, UPF) network element, an NWDAF network element, a data collection coordination function (data collection coordination function, DCCF) network element, an analytics data repository function (analytics data repository function, ADRF) network element, or the like.

The operator network includes the radio access network and a core network. The UE accesses the core network through the (R)AN, and the core network includes a user plane network element and a control plane network element. The user plane network element of the core network includes a UPF network element, and the control plane network element of the core network includes at least one of network elements such an AUSF, an AMF, an SMF, an NSSF, an NEF, an NRF, a UDM, a PCF, an AF, an NWDAF, a DCCF, or an ADRF.

The user plane network element (for example, the UPF network element) is mainly responsible for forwarding a data packet, controlling quality of service (quality of service, QoS), collecting statistics about charging information, and the like. The control plane network element is mainly responsible for service procedure interaction, and delivering a data packet forwarding policy, a QoS control policy, and the like to a user plane.

A control plane of the core network may use the service-based architecture, to be specific, a point-to-point communication mode in a conventional architecture is replaced with a service invoking mode for interaction between control plane network elements. In the service-based architecture, a control plane network element exposes a service to another control plane network element for invoking by the another control plane network element. In point-to-point communication, a set of specific messages exist in a communication interface between control plane network elements, and can be used only by control plane network elements at two ends of the interface during communication.

Functions of the network elements in the core network are described as follows:
The UPF supports all or some of the following functions: interconnection between a protocol data unit (protocol data unit, PDU) session and a data network, packet routing and forwarding (for example, supporting uplink classifier (uplink classifier) on traffic and forwarding the traffic to the data network, and supporting a branching point (branching point) to support a multi-homed (multi-homed) PDU session), or data packet detection.

The AMF performs access management and mobility management on the UE, and is responsible for status maintenance of the UE, reachability management of the UE, forwarding of a non-mobility management (mobility management, MM) non-access-stratum (non-access-stratum, NAS) message, and forwarding of a session management (session management, SM) N2 message.

The SMF performs session management on the UE, and allocates and releases a resource for a session of the UE. The resource includes session quality of service (quality of service, QoS), a session path, a forwarding rule, and the like. The SMF is responsible for selecting or reselecting a UPF, allocating an internet protocol (Internet protocol, IP) address, establishing, modifying, and releasing a bearer, and the like.

The NEF exposes a network function to a third party through a northbound application programming interface (application programming interface, API).

The NRF provides a storage function and a selection function of network function entity information for another network element.

The UDM manages user subscription context, is responsible for managing subscription data of the UE, and notifies a corresponding network element when the subscription data is modified.

The UDR has a unified data repository function, and is responsible for storing and retrieving subscription data, policy data, common architecture data, and the like, so that a network element such as the UDM, the PCF, or the NEF can obtain related data. The UDR can provide different data access authentication mechanisms for different types of data (for example, the subscription data and the policy data), to ensure data access security. The UDR needs to be capable of returning a failure response with an appropriate cause value for an invalid service-based operation or data access request.

The PCF performs user policy management, and is configured to generate and manage users, sessions, and QoS flow handling policies.

The AF performs application management, and provides a specific application layer service for the UE. When providing the service for the UE, the AF has requirements on a QoS (policy (policy)) and a charging (charging) policy and needs to notify the network. In addition, the AF also needs the core network to feed back application-related information.

The NWDAF is a network element related to artificial intelligence (artificial intelligence, AI) data, collects data from an NF (such as the SMF, the UPF, or the AMF), an AF, and an operation, administration, and maintenance system (operation, administration, and maintenance, OAM) of the operator network, analyzes the collected data, and sends an analytics result to the NF and the AF for subsequent processing.

The DCCF is used as a network element for AI data collection coordination. A data consumer (for example, the NWDAF) may send a data request to the DCCF instead of directly sending the data request to the NF. When performing a data collection operation, the DCCF checks whether historical data can be used in the ADRF or the NWDAF, and subscribes to collect data from the NF if the historical data cannot be used.

The ADRF is used as a network element for storing AI data, and provides an interface for the NWDAF to store collected data and an analytics result, or may interact with the DCCF to store the collected data.

Related interfaces between the network element functions in embodiments of this application include:
N1: is an interface between the UE and the control plane of the core network.

N2: is a communication interface between the (R)AN and the control plane of the core network.

N3: is a communication interface between the (R)AN and the UPF, and is configured to transmit user plane data.

N4: is a communication interface between the SMF and the UPF, and is used by the SMF to perform policy configuration and the like on the UPF.

N6: is a communication port between the UPF and the DN.

The NWDAF network element shown in FIG. 1 may implement functions of data collection, model training, and data analytics based on a service-based interface (service-based interface, SBI). For example, FIG. 2 is a diagram of data collection by an NWDAF network element. The NWDAF network element directly collects data from an NF network element based on a service-based interface Nnf, the NWDAF network element collects data from the NF based on a service-based interface Ndccf by using a DCCF, or the NWDAF network element collects data from the NF based on a service-based interface Nmfaf by using a messaging framework (messaging framework) of a message framework adaptor function (messaging framework adaptor function, MFAF).

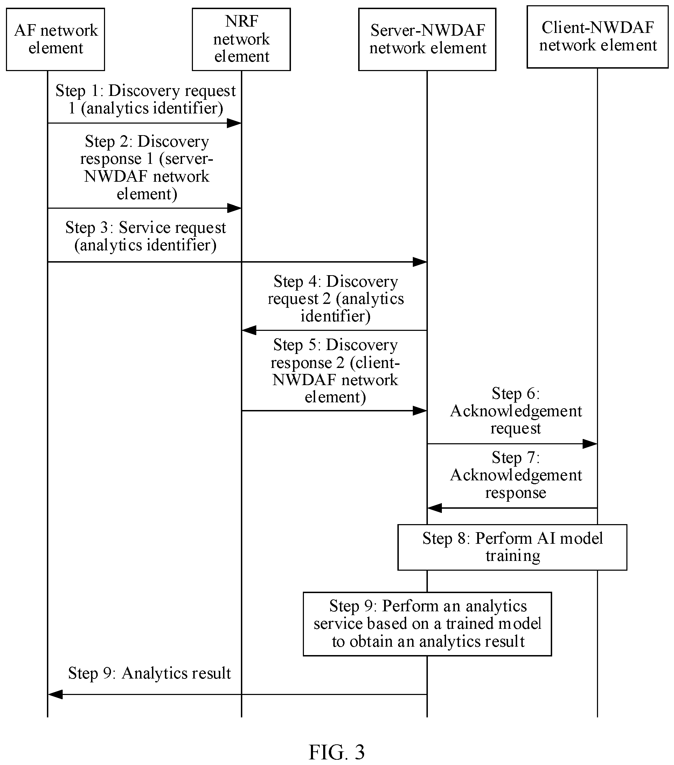

For another example, FIG. 3 is a diagram of model training and data analytics performed by an NWDAF network element. A scenario shown in FIG. 3 is a federated learning (federated learning, FL) scenario. An NWDAF network element (namely, a server-NWDAF network element) having a server (server) function and an NWDAF network element (namely, a client-NWDAF network element) having a client (client) function implement model training and data analytics. Specific steps are as follows:
Step 1: An AF network element sends a discovery request 1 to an NRF network element, where the discovery request 1 is an Nnrf_NFDiscovery_Request message, the discovery request 2 includes an analytics identifier, and the discovery request 1 is used to request the NRF network element to discover a server-NWDAF network element corresponding to the analytics identifier.
Step 2: The NRF network element sends a discovery response 1 to the AF network element, where the discovery response 1 is an Nnrf_NFDiscovery_Response message, and the discovery response 1 is used to indicate the server-NWDAF network element corresponding to the analytics identifier.
Step 3: The AF network element sends a service request to the server-NWDAF network element, where the service request includes the analytics identifier, and the service request is used to request the server-NWDAF network element to provide an analytics service corresponding to the analytics identifier.
Step 4: The server-NWDAF network element sends a discovery request 2 to the NRF network element, where the discovery request 2 is an Nnrf_NFDiscovery_Request message, the discovery request 2 includes the analytics identifier, and the discovery request 2 is used to request the NRF network element to discover a client-NWDAF network element corresponding to the analytics identifier.
Step 5: The NRF network element sends a discovery response 2 to the server-NWDAF network element, where the discovery response 2 is an Nnrf_NFDiscovery_Response message, and the discovery response 2 is used to indicate the client-NWDAF network element corresponding to the analytics identifier.
Step 6: The server-NWDAF network element sends an acknowledgement request to the client-NWDAF network element, where the preparation request is used to request the client-NWDAF network element to acknowledge whether to perform model training.
Step 7: The client-NWDAF network element sends an acknowledgement response to the server-NWDAF network element, where the acknowledgement response is used to indicate the client-NWDAF network element to acknowledge performing model training.
Step 8: The server-NWDAF network element and the client-NWDAF network element perform model training.
Step 9: The server-NWDAF network element performs the analytics service based on a trained model to obtain an analytics result, and sends the analytics result to the AF network element.

For a large amount of data generated when the server-NWDAF network element and the client-NWDAF network element perform the analytics service, the server-NWDAF network element and the client-NWDAF network element may perform transmission by using a transmission control protocol (transmission control protocol, TCP) corresponding to a service-based interface. However, due to a congestion control mechanism of a TCP, in other words, a transmission rate is adjusted based on a network congestion degree, a transmission delay is large. In addition, because the server-NWDAF network element and the client-NWDAF network element are determined by the NRF network element based on the analytics identifier provided by the AF network element, the server-NWDAF network element and the client-NWDAF network element may not be capable of performing the analytics service. For example, the server-NWDAF network element and the client-NWDAF network element may be heavily loaded or have an insufficient capability, resulting in low analytics efficiency, or even a possible analytics failure.

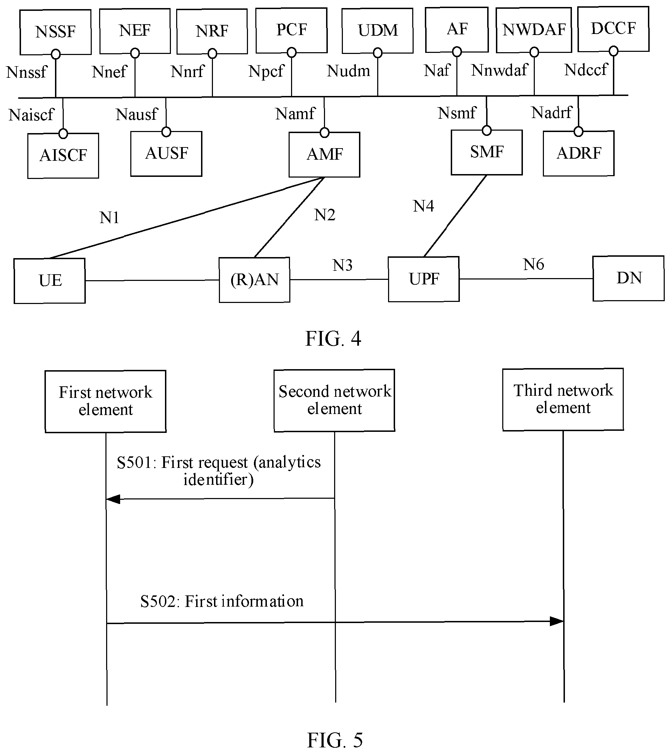

FIG. 4 is a diagram of another possible communication system. Compared with the system shown in FIG. 1, the system shown in FIG. 4 further includes the following network element:
an artificial intelligence service control function (artificial intelligence service control function, AISCF) network element, responsible for a control function for AI services and capable of performing data orchestration for AI data-related network elements (such as the NWDAF network element, the DCCF network element, and the ADRF network element). The orchestration includes selection of a network element, a specific operation of the network element, selection of a transmission protocol, and the like. In a specific implementation, the AISCF network element may be a type of service control function (service control function, SCF) network element. The AISCF network element may be independently deployed on a physical entity, or may be integrated with another network element on a physical entity. This is not limited in this embodiment of this application.

It should be understood that names of the foregoing network elements are merely examples. This application does not exclude a case in which these network elements have other names or functions of the network elements are merged. With evolution of technologies, any device or network element that can implement the functions of the foregoing network elements falls within the protection scope of this application. In addition, during actual application, the communication system may further include another network element. This is not limited in this application.

The following describes methods provided in embodiments of this application with reference to the accompanying drawings. The embodiments of this specification may be applied to the communication system shown in FIG. 4. For example, the AISCF network element described in embodiments of this specification may be the AISCF network element in FIG. 4, the NRF network element described in embodiments of this specification may be the NRF network element in FIG. 4, the AF network element described in embodiments of this specification may be the AF network element in FIG. 4, the NEF network element described in embodiments of this specification may be the NEF network element in FIG. 4, the NWDAF network element described in embodiments of this specification may be the NWDAF network element in FIG. 4, the DCCF network element described in embodiments of this specification may be the DCCF network element in FIG. 4, and the ADRF network element described in embodiments of this specification may be the ADRF network element in FIG. 4.

In the accompanying drawings corresponding to embodiments of this application, all steps represented by dashed lines are optional steps.

An embodiment of this application provides a communication method. FIG. 5 is a flowchart of the method. The method may be applied to the communication system in FIG. 4. In the embodiment shown in FIG. 5, the following example is used: a first network element includes an AISCF network element, a second network element includes an AF network element and/or an NEF network element, and a third network element includes one or more of an NWDAF network element, a DCCF network element, or an ADRF network element.

S501: The second network element sends a first request to the first network element, and correspondingly, the first network element receives the first request from the second network element.

In this embodiment of this application, the first request may include an analytics identifier, and the first request may be used to request the first network element to provide an analytics service corresponding to the analytics identifier.

Specifically, the analytics identifier may indicate a type of the analytics service. For example, the first request may include an identifier 1, where the identifier 1 may indicate an analytics service 1, and the analytics service 1 may be used to predict central processing unit (central processing unit, CPU) utilization of a network element.

Optionally, the first request may further include a parameter indicating other information of the analytics service, for example, a parameter indicating a specific analytics scenario corresponding to the analytics service, where for example, the first request may further include a parameter 1, and the parameter 1 may indicate an FL scenario; for another example, a parameter indicating a specific analytics model corresponding to the analytics service, where for example, the first request may further include a parameter 2, and the parameter 2 may indicate a long short-term memory (long short-term memory, LSTM) model; and for another example, a parameter indicating a maximum analytics time corresponding to the analytics service, where for example, the first request may further include a parameter 3, and the parameter 3 may indicate 5 minutes.

S502: The first network element sends first information to the third network element, and correspondingly, the third network element receives the first information from the first network element.

In this embodiment of this application, the first information may be used to request the third network element to perform the analytics service.

Specifically, before sending the first information to the third network element, the first network element may further determine the third network element based on the second information. The second information may include, but is not limited to, one or more of the following: location information of the third network element, capability information of the third network element, or load level information of the third network element.

The capability information of the third network element may indicate that the third network element has a capability of performing the analytics service. Alternatively, the capability information of the third network element may indicate that the third network element is capable of performing the analytics service. Alternatively, the capability information of the third network element may indicate that a capability of the third network element satisfies an execution condition the analytics service. For example, if the model for performing the analytics service is an LSTM model and the third network element is capable of training and deploying the LSTM model, then the third network element has the capability of performing the analytics service. The first network element may select the third network element to perform the analytics service, thereby improving an analytics success rate.

The load level information of the third network element may indicate that a load of the third network element is less than or equal to a first threshold. A load of a network element is a ratio of compute resources used by the network element to total compute resources of the network element. The first threshold may be a default value, a value set by the first network element, or a value preconfigured in the first network element. This is not specifically limited in this embodiment of this application. The first threshold may be related to the analytics service. For example, different analytics services correspond to their respective thresholds, and thresholds corresponding to different analytics services may be the same or different. Alternatively, the first threshold may be unrelated to the analytics service. For example, thresholds corresponding to different analytics services are all the first threshold. If a load of a network element is less than the first threshold, it indicates that a compute resource of the network element can support execution of the analytics service. Therefore, this selection manner facilitates selection of an appropriate network element. For example, if the first threshold is 60% and a load of a network element 1 is 50%, the first network element may select the network element 1 to perform the analytics service (in this case, the network element 1 is the third network element). Optionally, if there are a plurality of candidate network elements whose loads are less than the first threshold, the first network element may randomly select one of them to perform the analytics service, or the first network element may select a network element with the smallest load among the candidate network elements to perform the analytics service. For example, if the first threshold is 60%, a load of the network element 1 is 50%, a load of a network element 2 is 40%, and a load of a network element 3 is 70%, then the first network element may select the network element 1 or the network element 2 to perform the analytics service (in this case, the network element 1 or the network element 2 is the third network element). Alternatively, the load level information of the third network element may indicate that the load of the third network element is less than a load of at least one network element. The at least one network element is a candidate network element that supports performing the analytics service. It may be understood that no threshold is set, and the first network element may select a network element with the smallest load among the at least one candidate network element to perform the analytics service. For example, if a load of the network element 1 is 50%, a load of the network element 2 is 60%, and a load of the network element 3 is 70%, then the first network element may select the network element 1 to perform the analytics service (in this case, the network element 1 is the third network element). When a load of a network element is relatively low, the network element may perform the analytics service with higher efficiency, thereby improving execution efficiency of the analytics service.

In an example, if the third network element is the NWDAF network element, the second information may include, but is not limited to one or more of the following: location information of the NWDAF network element; capability information of the NWDAF network element, for example, a function of the NWDAF network element, such as possessing a model training logical function (model training logical function, MTLF) and/or an analytics logical function (analytics logical function, AnLF), or possessing a server (server) function or a client (client) function in an FL scenario, or for another example, a model that may be trained or deployed by the NWDAF network element, such as an LSTM model or a large language model (large language model, LLM), or for still another example, a transmission protocol that may be used by the NWDAF network element, such as quick user datagram protocol (user datagram protocol, UDP) internet connections (quick UDP internet connections, QUIC), a loss tolerant transmission protocol (loss tolerant transmission protocol, LTP), or a TCP; and load level information of the NWDAF network element, such as a CPU load of the NWDAF network element.

If in S501, the first network element determines that the analytics service is used to predict CPU utilization of the second network element, and determines that an execution condition of the analytics service is as follows: A specific analytics model corresponding to the analytics service is an LSTM model, which may be understood as that the first network element determines that a network element performing the analytics service needs to be capable of training and deploying an LSTM model; a specific analytics scenario corresponding to the analytics service is an FL scenario, which may be understood as that the first network element determines that the network element performing the analytics service needs to possess a server function and a client function; and a maximum analytics time corresponding to the analytics service is 5 minutes, which may be understood as that the first network element sets, based on the maximum analytics time of 5 minutes, that a load of the network element performing the analytics service needs to be less than or equal to a threshold 1 (for example, 50%), so that an analytics time for performing the analytics service by the network element to obtain an analytics result is less than or equal to 5 minutes.

Further, the first network element may determine three NWDAF network elements, for example, an NWDAF network element 1, an NWDAF network element 2, and an NWDAF network element 3, in a plurality of NWDAF network elements based on one or more of location information, capability information, or load level information of the plurality of NWDAF network elements. The NWDAF network element 1 may have the model training logical function and the analytics logical function, the NWDAF network element 1 may train or deploy the LSTM model, the NWDAF network element 1 possesses the server function in the FL scenario, and a CPU load of the NWDAF network element 1 is less than 50%. The NWDAF network element 1 can serve as an AnLF-NWDAF network element to deploy the model for performing the analytics service, and perform the analytics service based on the model to obtain the analytics result, and can serve as a server-NWDAF network element, and jointly train, with a client-NWDAF network element, the model for performing the analytics service. The NWDAF network element 2 possesses the model training logical function, the NWDAF network element 2 may train the LSTM model, the NWDAF network element 2 possesses the client function in the FL scenario, and a CPU load of the NWDAF network element 2 is low and is less than 50%. The NWDAF network element 3 possesses the model training logical function, the NWDAF network element 3 may train the LSTM model, the NWDAF network element 3 possesses the client function in the FL scenario, and a CPU load of the NWDAF network element 3 is less than 50%. The NWDAF network element 2 and the NWDAF network element 3 can serve as a client-NWDAF network element and jointly train, with a server-NWDAF network element, the model for performing the analytics service.

Alternatively, the first network element may determine four NWDAF network elements, for example, an NWDAF network element 4, an NWDAF network element 5, an NWDAF network element 6, and an NWDAF network element 7, among a plurality of NWDAF network elements based on one or more of the following: location information, capability information, or load level information of the plurality of NWDAF network elements. The NWDAF network element 4 possesses the analytics logical function, the NWDAF network element 4 may deploy the LSTM model, and a CPU load of the NWDAF network element 4 is less than 50%. The NWDAF network element 4 can serve as an AnLF-NWDAF network element to deploy the model for performing the analytics service, and perform the analytics service based on the model to obtain the analytics result, and can serve as a server-NWDAF network element, and jointly train, with a client-NWDAF network element, the model for performing the analytics service. The NWDAF network element 5 possesses the model training logical function, the NWDAF network element 5 may train the LSTM model, the NWDAF network element 5 possesses the server function in the FL scenario, and a CPU load of the NWDAF network element 5 is less than 50%. The NWDAF network element 5 can serve as a server-NWDAF network element and jointly train, with a client-NWDAF network element, the model for performing the analytics service. The NWDAF network element 6 possesses the model training logical function, the NWDAF network element 6 may train the LSTM model, the NWDAF network element 6 possesses the client function in the FL scenario, and a CPU load of the NWDAF network element 6 is less than 50%. The NWDAF network element 7 possesses the model training logical function, the NWDAF network element 7 may train the LSTM model, the NWDAF network element 7 possesses the client function in the FL scenario, and a CPU load of the NWDAF network element 7 is less than 50%. The NWDAF network element 6 and the NWDAF network element 7 can serve as a client-NWDAF network element and jointly train, with a server-NWDAF network element, the model for performing the analytics service.

For another example, the third network element is the DCCF network element. The second information may include, but is not limited to, one or more of the following: location information of the DCCF network element; capability information of the DCCF network element, for example, data that may be collected by the DCCF network element, such as load level information (load level information), service experience information (service experience information), network performance information (network performance information), user data congestion information (user data congestion information), session management congestion control experience information (session management congestion control experience information), and redundant transmission experience information (redundant transmission experience information), and for another example, a transmission protocol that may be used by the DCCF network element, such as QUIC, an LTP, or a TCP; and load level information of the DCCF network element, such as a CPU load of the DCCF network element.

In S501, the first network element determines that the analytics service is used to predict CPU utilization of the second network element, and determines that an execution condition of the analytics service is as follows: A maximum analytics time corresponding to the analytics service is 5 minutes, which may be understood as that a load of a network element that performs the analytics service needs to be less than or equal to a threshold 1 (for example, 50%), so that an analytics time for performing the analytics service by the network element to obtain an analytics result is less than or equal to 5 minutes. The first network element may determine one DCCF network element, for example, a DCCF network element 1, among a plurality of DCCF network elements. The DCCF network element 1 may collect the load level information, and a CPU load of the DCCF network element 1 is less than 50%. The DCCF network element 1 can provide needed data for the client-NWDAF network element, the server-NWDAF network element, and the AnLF-NWDAF network element.

In still another example, the third network element is the ADRF network element. The second information may include, but is not limited to, one or more of the following: location information of the ADRF network element; capability information of the ADRF network element, for example, a model that may be stored by the ADRF network element, such as an LSTM model or an LLM, for another example, data that may be stored by the ADRF network element, such as load level information, service experience information, network performance information, user data congestion information, session management congestion control experience information, and redundant transmission experience information, and for still another example, a transmission protocol that may be used by the ADRF network element, such as QUIC, an LTP, or a TCP; and load level information of the ADRF network element, such as CPU load of the ADRF network element.

In S501, the first network element determines that the analytics service is used to predict CPU utilization of the second network element, and determines that an execution condition of the analytics service is as follows: A specific analytics model corresponding to the analytics service is an LSTM model, which may be understood as that a network element that performs the analytics service needs to be capable of training and deploying an LSTM model; and a maximum analytics time corresponding to the analytics service is 5 minutes, which may be understood as that a load of the network element performing the analytics service needs to be less than or equal to a threshold 1 (for example, 50%), so that an analytics time for performing the analytics service by the network element to obtain an analytics result is less than or equal to 5 minutes. The first network element may determine one ADRF network element, for example, an ADRF network element 1, among a plurality of ADRF network elements. The ADRF network element 1 may store the LSTM model and the load level information, and a CPU load of the ADRF network element 1 is less than 50%. The ADRF network element 1 can store the model that is obtained by the client-NWDAF network element and the server-NWDAF network element through training and that is used to perform the analytics service, and store the analytics result obtained by the AnLF-NWDAF network element by performing the analytics service. The ADRF network element 1 can further provide needed data for the client-NWDAF network element, the server-NWDAF network element, and the AnLF-NWDAF network element.

Optionally, the first network element may further obtain the second information before determining the third network element based on the second information.

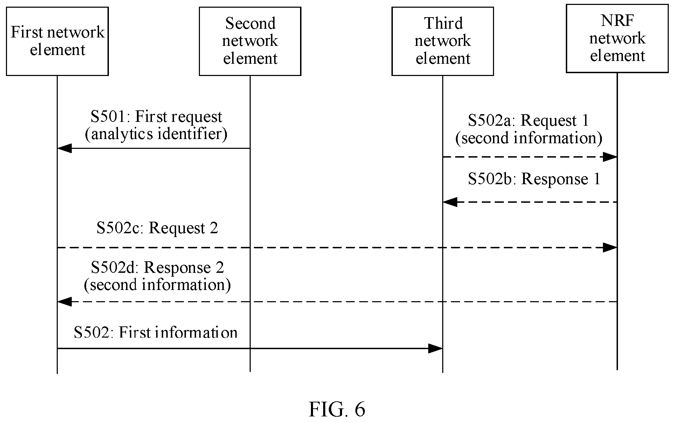

For example, refer to FIG. 6. Before S502 is performed, this application may further perform the following steps.

S502a: The third network element sends a request 1 to the NRF network element, and correspondingly, the NRF network element receives the request 1 from the third network element. The request 1 is also referred to as a registration request, and the request 1 may be an Nnrf_NFManagement_NFRegister Request message. The request 1 may include the second information.

S502b: The NRF network element sends a response 1 to the third network element, and correspondingly, the third network element receives the response 1 from the NRF network element. The response 1 is also referred to as a registration response, and the response 1 may be an Nnrf_NFManagement_NFRegister Response message. The response 1 may indicate that the NRF network element has successfully stored the second information.

S502c: The first network element sends a request 2 to the NRF network element, and correspondingly, the NRF network element receives the request 2 from the first network element. The request 2 is also referred to as a discovery request, and the request 2 may be an Nnrf_NFDiscovery_Request message. The request 2 may be used to request the NRF network element to provide the second information.

S502d: The NRF network element sends a response 2 to the first network element, and correspondingly, the first network element receives the response 2 from the NRF network element. The response 2 is also referred to as a discovery response, and the response 2 may be an Nnrf_NFDiscovery_Response message. The response 2 may include the second information.

According to the foregoing solution, the first network element selects, based on one or more of a location, a capability, or load of the third network element, the third network element that can perform the analytics service, so that the selected third network element can better perform the analytics service, thereby improving an analytics success rate and further improving analytics efficiency.

Specifically, when the first network element sends the first information to the third network element, the first information may include a first identifier, and the first identifier indicates the model for performing the analytics service. It may be understood as that the first network element requests, by sending the first identifier to the third network element, the third network element to perform the analytics service. For example, in S501, if the first network element determines that a specific analytics model corresponding to the analytics service is the LSTM model, the first information sent by the first network element to the third network element may include an identifier 2, and the identifier 2 may indicate the LSTM model.

Optionally, the first information may further include information about a first transmission protocol for performing the analytics service. The first transmission protocol may be used for data transmission between the third network element and the second network element. The first transmission protocol may be determined by the first network element based on a type of data (for example, artificial intelligence-related data, machine learning-related data, or federated learning related data) to be transmitted between the third network element and the second network element from transmission protocols supported by the third network element and the second network element.

For example, the transmission protocols supported by the third network element and the second network element include QUIC, an LTP, and a TCP. Machine learning-related data 1 (namely, the analytics result obtained by the third network element by performing the analytics service) is transmitted between the third network element and the second network element. Because an amount of data 1 may be large, network congestion is easily caused when the data 1 is transmitted. Network congestion is controlled in different manners based on different transmission protocols. Network congestion is controlled by adjusting a transmission rate based on some transmission protocols (such as a TCP), so that a transmission delay is large when the network congestion is heavy. Network congestion is not controlled by adjusting a transmission rate based on some transmission protocols (such as QUIC and an LTP), so that a transmission delay is small when the network congestion is heavy. However, network congestion is controlled in other manners based on the QUIC and the LTP. For example, network congestion is controlled by discarding packets based on the LTP. For example, a transmission delay corresponding to transmission of the data 1 based on the QUIC is three seconds, a transmission delay corresponding to transmission of the data 1 based on the LTP is three seconds, and a transmission delay corresponding to transmission of the data 1 based on the TCP is four seconds. It can be learned that the transmission delays corresponding to the transmission of the data 1 based on the QUIC and the LTP are both smaller than the transmission delay corresponding to the transmission of the data 1 based on the TCP. In this case, because no part of data is allowed to be lost during transmission of the data 1, to reduce the transmission delay and improve transmission reliability, the first network element may determine that the data 1 is transmitted between the third network element and the second network element based on the QUIC, in other words, the first transmission protocol is the QUIC.

Further, optionally, if the third network element includes a plurality of network elements, the first information may further include information about at least one transmission protocol or at least two transmission protocols for performing the analytics service. The at least one transmission protocol or one transmission protocol among the at least two transmission protocols may be used for data transmission between any two network elements among the plurality of network elements. The transmission protocol may be determined by the first network element based on a type of data (for example, artificial intelligence-related data, machine learning-related data, or federated learning-related data) to be transmitted between the any two network elements from transmission protocols supported by the any two network elements.

For example, the third network element includes the NWDAF network element 4, the NWDAF network element 5, the NWDAF network element 6, the NWDAF network element 7, and the ADRF network element 1, and transmission protocols supported by the NWDAF network element 4, the NWDAF network element 5, the NWDAF network element 6, and the ADRF network element 1 include the QUIC, the LTP, and the TCP.

Federated learning-related data 2 (namely, data generated, by the NWDAF network element 7 and the NWDAF network element 5, during the process of training the model for performing the analytics service) is transmitted between the NWDAF network element 7 and the NWDAF network element 5. Federated learning-related data 3 (namely, data generated, by the NWDAF network element 6 and the NWDAF network element 5, during the process of training the model for performing the analytics service) is transmitted between the NWDAF network element 6 and the NWDAF network element 5. Because an amount of data 2 and an amount of data 3 may be large, network congestion is easily caused when the data 2 and the data 3 are transmitted. Network congestion is controlled in different manners based on different transmission protocols. Network congestion is controlled by adjusting a transmission rate based on some transmission protocols (such as a TCP), so that a transmission delay is large when the network congestion is heavy. Network congestion is not controlled by adjusting a transmission rate based on some transmission protocols (such as QUIC and an LTP), so that a transmission delay is small when the network congestion is heavy. However, network congestion is controlled in other manners based on the QUIC and the LTP. For example, network congestion is controlled by discarding packets based on the LTP. For example, a transmission delay corresponding to transmission of the data 2 and the data 3 based on the QUIC is eight seconds, a transmission delay corresponding to transmission of the data 2 and the data 3 based on the LTP is seven seconds, and a transmission delay corresponding to transmission of the data 2 and the data 3 based on the TCP is 15 seconds. It can be learned that the transmission delays corresponding to the transmission of the data 2 and the data 3 based on the QUIC and the LTP are both smaller than the transmission delays corresponding to the transmission of the data 2 and the data 3 based on the TCP. In this case, because a part of data is allowed to be lost during transmission of the data 2 and the data 3, to reduce the transmission delay, the first network element may determine that the data 2 is transmitted between the NWDAF network element 7 and the NWDAF network element 5 based on the LTP, and the data 3 is transmitted between the NWDAF network element 6 and the NWDAF network element 5 based on the LTP.

Machine learning-related data 4 (namely, data that is of the model for performing the analytics service and that is obtained by the NWDAF network element 6 and the NWDAF network element 5 through training) is transmitted between the NWDAF network element 5 and the NWDAF network element 4, and that the data 4 is transmitted between the NWDAF network element 5 and the ADRF network element 1. Because an amount of data 4 may be large, network congestion is easily caused when the data 4 is transmitted. Network congestion is controlled in different manners based on different transmission protocols. Network congestion is controlled by adjusting a transmission rate based on some transmission protocols (such as a TCP), so that a transmission delay is large when the network congestion is heavy. Network congestion is not controlled by adjusting a transmission rate based on some transmission protocols (such as QUIC and an LTP), so that a transmission delay is small when the network congestion is heavy. However, network congestion is controlled in other manners based on the QUIC and the LTP. For example, network congestion is controlled by discarding packets based on the LTP. For example, a transmission delay corresponding to transmission of the data 4 based on the QUIC is three seconds, a transmission delay corresponding to transmission of the data 4 based on the LTP is eight seconds, and a transmission delay corresponding to transmission of the data 4 based on the TCP is 20 seconds. It can be learned that the transmission delays corresponding to the transmission of the data 4 based on the QUIC and the LTP are both smaller than the transmission delay corresponding to the transmission of the data 4 based on the TCP. In this case, because no part of data is allowed to be lost during transmission of the data 4, to reduce the transmission delay and improve transmission reliability, the first network element may determine that the data 4 is transmitted between the NWDAF network element 5 and the NWDAF network element 4 based on the QUIC, and that the data 4 is transmitted between the NWDAF network element 5 and the ADRF network element 1 based on the QUIC.

Optionally, the first information may further indicate one or more of the following: training the model indicated by the first identifier; deploying (or loading, or running) the model obtained through training by the third network element, and performing the analytics service based on the model obtained through training by the third network element; or storing the model obtained through training by the third network element. Deploying the model obtained through training by the third network element means opening a specific interface to invoke specific data or services through the interface to perform the analytics service, and storing the model obtained through training by the third network element means that a specific interface is not opened and only data of the model obtained through training by the third network element is stored.

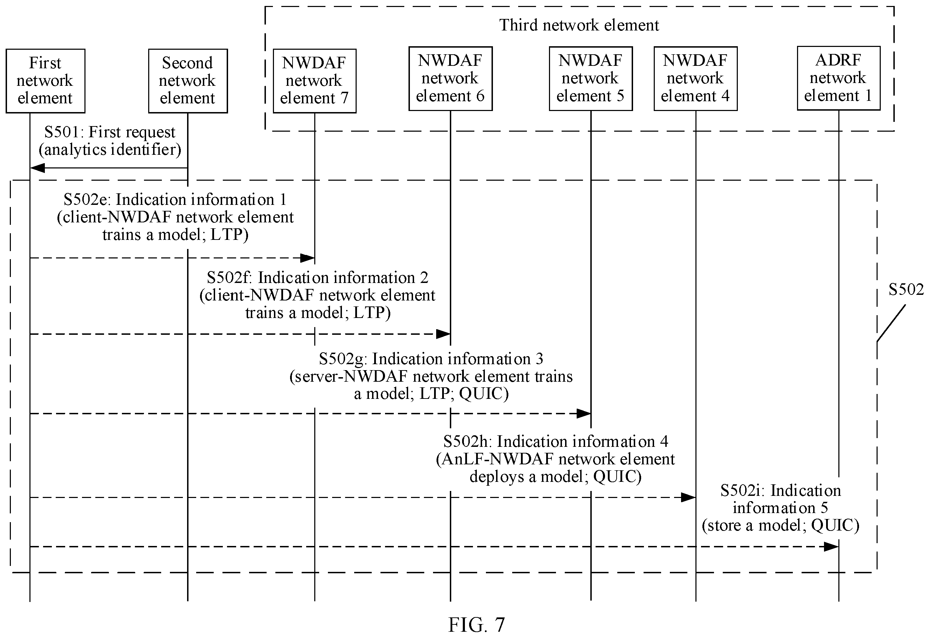

For example, the third network element includes the NWDAF network element 4, the NWDAF network element 5, the NWDAF network element 6, the NWDAF network element 7, and the ADRF network element 1. Refer to FIG. 7. S502 may specifically include the following steps.

S502e: The first network element sends indication information 1 to the NWDAF network element 7, and correspondingly, the NWDAF network element 7 receives the indication information 1 from the first network element.

The indication information 1 may indicate the NWDAF network element 7 to serve as the client-NWDAF network element in the FL scenario to train a model 1 of an LSTM identifier 2.

The indication information 1 may further indicate that data a (namely, data generated, by the NWDAF network element 7 and the NWDAF network element 5, during the process of training an LSTM model 1) is transmitted between the NWDAF network element 7 and the NWDAF network element 5 based on the LTP.

S502f: The first network element sends indication information 2 to the NWDAF network element 6, and correspondingly, the NWDAF network element 6 receives the indication information 2 from the first network element.

The indication information 2 may indicate the NWDAF network element 6 to serve as the client-NWDAF network element in the FL scenario to train the LSTM model 1 indicated by the identifier 2.

The indication information 2 may further indicate that data b (namely, data generated, by the NWDAF network element 6 and the NWDAF network element 5, during the process of training the LSTM model 1) is transmitted between the NWDAF network element 6 and the NWDAF network element 5 based on the LTP.

S502g: The first network element sends indication information 3 to the NWDAF network element 5, and correspondingly, the NWDAF network element 5 receives the indication information 3 from the first network element.

The indication information 2 may indicate the NWDAF network element 5 to serve as the server-NWDAF network element in the FL scenario to train the LSTM model 1 indicated by the identifier 2.

The indication information 2 may further indicate that the data a is transmitted between the NWDAF network element 5 and the NWDAF network element 7 based on the LTP, the data b is transmitted between the NWDAF network element 5 and the NWDAF network element 6 based on the LTP, data c (namely, data of an LSTM model 2 obtained through training by the NWDAF network element 6, the NWDAF network element 7, and the NWDAF network element 5) is transmitted between the NWDAF network element 5 and the NWDAF network element 4 based on the QUIC, and the data c is transmitted between the NWDAF network element 5 and the ADRF network element 1 based on the QUIC.

S502h: The first network element sends indication information 4 to the NWDAF network element 4, and correspondingly, the NWDAF network element 4 receives the indication information 4 from the first network element.

The indication information 4 may indicate the NWDAF network element 4 to serve as the AnLF-NWDAF network element to deploy the LSTM model 2 obtained through training by the NWDAF network element 6, the NWDAF network element 7, and the NWDAF network element 5, and perform the analytics service based on the LSTM model 2 obtained through training by the NWDAF network element 6, the NWDAF network element 7, and the NWDAF network element 5.

The indication information 4 may further indicate that data d (namely, an analytics result obtained by the NWDAF network element 4 by performing the analytics service based on the LSTM model 2 obtained through training by the NWDAF network element 6, the NWDAF network element 7, and the NWDAF network element 5) is transmitted between the NWDAF network element 4 and the second network element based on the QUIC.

S502i: The first network element sends indication information 5 to the ADRF network element 1, and correspondingly, the ADRF network element 1 receives the indication information 5 from the first network element.

The indication information 5 may indicate the ADRF network element 1 to store the LSTM model 2 obtained through training by the NWDAF network element 6, the NWDAF network element 7, and the NWDAF network element 5.

The indication information 5 may further indicate that the data c is transmitted between the ADRF network element 1 and the NWDAF network element 5 based on the QUIC.

It may be understood that the LSTM model 2 deployed by the NWDAF network element 4 in S502h may be obtained from the NWDAF network element 5, or may be obtained from the ADRF network element 1. This is not specifically limited in this embodiment of this application.

Optionally, the third network element may further perform the analytics service based on the first information after receiving the first information from the first network element.

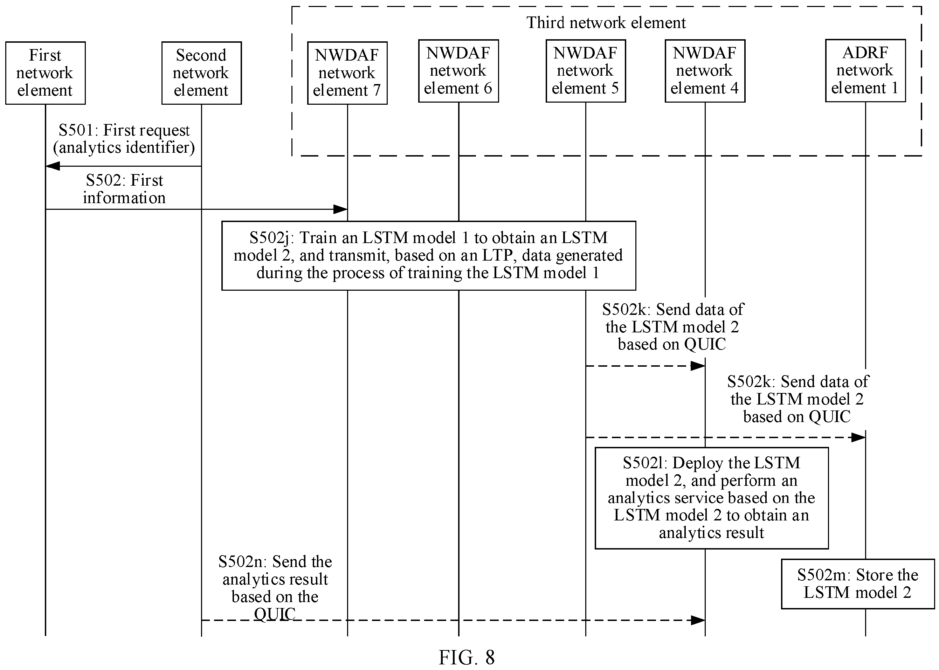

For example, the third network element includes the NWDAF network element 4, the NWDAF network element 5, the NWDAF network element 6, the NWDAF network element 7, and the ADRF network element 1. Refer to FIG. 8. After S502 is performed, this application may further perform the following steps.

S502j: The NWDAF network element 6, the NWDAF network element 7, and the NWDAF network element 5 train the LSTM model 1 to obtain the LSTM model 2, and transmit, based on the LTP, data generated during the process of training the LSTM model 1.

S502k: The NWDAF network element 5 sends the data of the LSTM model 2 to the NWDAF network element 4 and the ADRF network element 1 based on the QUIC, and correspondingly, the NWDAF network element 4 and the ADRF network element 1 receive the data of the LSTM model 2 from the NWDAF network element 5 based on the QUIC.

S502l: The NWDAF network element 4 deploys the LSTM model 2, and performs the analytics service based on the LSTM model 2, to obtain the analytics result.

S502m: The ADRF network element 1 stores the LSTM model 2.

S502n: The NWDAF network element 4 sends the analytics result to the second network element based on the QUIC, and correspondingly, the second network element receives the analytics result from the NWDAF network element 4 based on the QUIC.

It may be understood that the numbers of the steps shown in FIG. 7 and FIG. 8 are merely used to distinguish between different steps, but are not used to limit a sequence of the steps. For example, S502e may be performed before S502f, may be performed after S502f, or may be performed simultaneously with S502f.

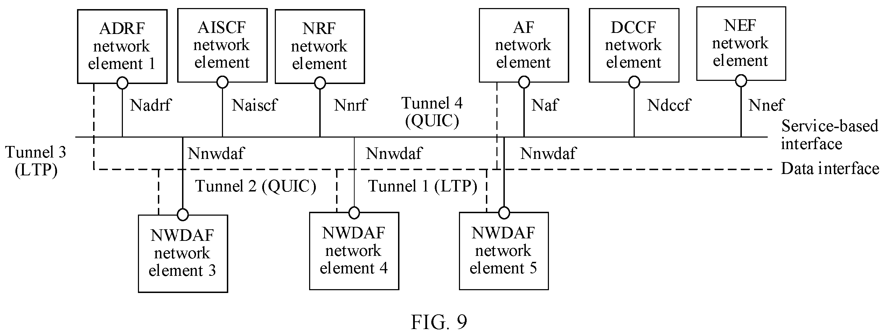

For ease of understanding, the following further describes interaction between the first network element, the second network element, the third network element, the NRF network element, and the DCCF network element. Refer to FIG. 9. The following example is used: the first network element includes an AISCF network element, the second network element includes an AF network element, and the third network element includes the NWDAF network element 4, the NWDAF network element 5, the NWDAF network element 6, the NWDAF network element 7, and the ADRF network element 1.

Interaction between the network elements may be based on a service-based interface. For example, the AISCF network element may interact with the AF network element, the NWDAF network element 4, the NWDAF network element 5, the NWDAF network element 6, the NWDAF network element 7, and the ADRF network element 1 based on a service-based interface Naiscf.

Alternatively, interaction between the network elements may be based on a data interface. For example, a tunnel 1 (used to transmit the data generated in the process of training the LSTM model 1) may be established between the NWDAF network element 6, the NWDAF network element 7, and the NWDAF network element 5 based on the LTP, a tunnel 2 (used to transmit the data of the LSTM model 2) may be established between the NWDAF network element 5 and the NWDAF network element 4 based on the QUIC, a tunnel 3 (used to transmit the data of the LSTM model 2) may be established between the NWDAF network element 5 and the ADRF network element 1 based on the QUIC, and a tunnel 4 (used to transmit the analytics result) is established between the NWDAF network element 4 and the AF network element based on the QUIC.

It may be understood that the foregoing embodiments of this application may be separately implemented, or the embodiments may be combined with each other. This is not limited in embodiments of this application.

The methods provided in embodiments of this application are described above with reference to the accompanying drawings. The following describes apparatuses provided in embodiments of this application with reference to the accompanying drawings.

Based on a same technical idea, an embodiment of this application provides a communication apparatus. The apparatus includes a module/unit/mean for performing the method performed by the devices in the foregoing method embodiment. The module/unit/mean may be implemented by software, may be implemented by hardware, or may be implemented by hardware executing corresponding software.

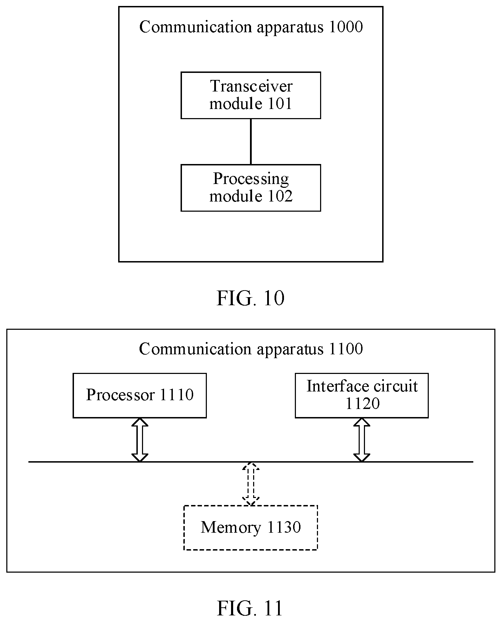

For example, FIG. 10 is a diagram of a communication apparatus 1000. The apparatus 1000 includes a transceiver module 101 and a processing module 102.

When the apparatus 1000 is a first network element or is located in the first network element, functions of the modules of the apparatus 1000 are as follows:
The transceiver module 101 is configured to receive a first request from a second network element, where the first request includes an analytics identifier, and the first request is used to request the first network element to provide an analytics service corresponding to the analytics identifier.

The transceiver module 101 is further configured to send first information to a third network element, where the third network element is determined by the processing module 102 based on second information, the first information is used to request the third network element to perform the analytics service, and the second information includes one or more of location information of the third network element, capability information of the third network element, or load level information of the third network element.

During specific implementation, the apparatus 1000 may have a plurality of product forms. The following describes several possible product forms.

FIG. 11 is a diagram of a communication apparatus 1100. The communication apparatus 1100 includes a processor 1110 and an interface circuit 1120. The interface circuit 1120 is configured to receive a signal from another communication apparatus other than the communication apparatus and transmit the signal to the processor 1110, or send a signal from the processor 1110 to another communication apparatus other than the communication apparatus. The processor 1110 is configured to implement, by using a logic circuit or executable instructions, the method performed by any one of the devices or the network elements in the foregoing method embodiment.

The processor 1110 and the interface circuit 1120 are coupled to each other. It can be understood that the interface circuit 1120 may be a transceiver or an input/output interface. Optionally, the communication apparatus 1100 may further include a memory 1130, configured to store instructions to be executed by the processor 1110, store input data needed by the processor 1110 to run instructions, or store data generated after the processor 1110 runs instructions.

When the communication apparatus is a module used in the first network element, the module implements the function of the first network element in the foregoing method embodiment. The module receives information from another module (for example, a radio frequency module or an antenna) in the first network element, where the information is sent by the second network element to the first network element; or the module sends information to another module (for example, a radio frequency module or an antenna) in the first network element, where the information is sent by the first network element to the third network element. The module herein may be a baseband chip in the first network element, or may be a DU or another module. The DU herein may be a DU in an open radio access network (open radio access network, O-RAN) architecture.

It should be understood that the processor mentioned in embodiments of this application may be implemented by hardware or by software. When the processor is implemented by the hardware, the processor may be a logic circuit, an integrated circuit, or the like. When the processor is implemented by the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, a storage (storage module) may be integrated into the processor.

It should be noted that the memory described in this specification aims to include, but is not limited to, these memories and any memory of another proper type. Based on a same technical idea, an embodiment of this application further provides a computer-readable storage medium. The storage medium stores a computer program or instructions. When the computer program or the instructions are executed by a processor, the method performed by any one of the devices or the network elements in the foregoing method embodiment is enabled to be implemented.

Based on a same technical idea, an embodiment of this application further provides a computer program product, including a computer program or instructions. When the computer program or the instructions are executed by a processor, the method performed by any one of the devices or the network elements in the foregoing method embodiment is enabled to be implemented.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, applied to a first network element, wherein the method comprises:
receiving a first request from a second network element, wherein the first request comprises an analytics identifier, and the first request is used to request the first network element to provide an analytics service corresponding to the analytics identifier; and
sending first information to a third network element, wherein the third network element is determined by the first network element based on second information, the first information is used to request the third network element to perform the analytics service, and the second information comprises one or more of location information of the third network element, capability information of the third network element, or load level information of the third network element.

2. The method according to claim 1, wherein the second information comprises the capability information of the third network element, and the capability information of the third network element indicates that the third network element has a capability of performing the analytics service.

3. The method according to claim 1 or 2, wherein the second information comprises the load level information of the third network element, wherein the load level information of the third network element indicates that a load of the third network element is less than or equal to a first threshold, or the load level information indicates that a load of the third network element is less than a load of at least one network element, and the at least one network element is a candidate network element that supports performing the analytics service.

4. The method according to any one of claims 1 to 3, wherein that the first information is used to request the third network element to perform the analytics service comprises:
the first information comprises a first identifier, and the first identifier indicates a model for performing the analytics service.

5. The method according to any one of claims 1 to 4, wherein the first information comprises information about a first transmission protocol for performing the analytics service, and the first transmission protocol is used for data transmission between the third network element and the second network element.

6. The method according to claim 5, wherein the first transmission protocol is determined, based on a type of data to be transmitted between the third network element and the second network element, from transmission protocols supported by the third network element and the second network element.

7. The method according to any one of claims 1 to 6, wherein the third network element comprises a plurality of network elements, the first information comprises information about at least two transmission protocols for performing the analytics service, and one of the at least two transmission protocols is used for data transmission between any two network elements among the plurality of network elements.

8. The method according to claim 7, wherein the transmission protocol is determined, based on a type of data to be transmitted between the any two network elements, from transmission protocols supported by the any two network elements.

9. The method according to any one of claims 1 to 8, wherein the first information further indicates one or more of the following:
training the model indicated by the first identifier;
deploying a model obtained through training by the third network element, and performing the analytics service based on the model obtained through training by the third network element; or
storing the model obtained through training by the third network element.

10. The method according to any one of claims 1 to 9, wherein the method further comprises:
receiving the second information from a network repository function network element.

11. The method according to any one of claims 1 to 10, wherein the second network element comprises an application function network element and/or a network exposure function network element.

12. The method according to any one of claims 1 to 11, wherein the third network element comprises one or more of the following: a network data analytics function network element, a data collection coordination function network element, or an analytics data repository function network element.

13. A communication apparatus, comprising a module configured to perform the method according to any one of claims 1 to 12.

14. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor implements the method according to any one of claims 1 to 12 by using a logic circuit or by executing code instructions.

15. A communication apparatus, comprising:
a memory, configured to store a computer program; and
a processor, configured to invoke the computer program from the memory and run the computer program, to perform the method according to any one of claims 1 to 12.

16. A chip system, comprising:
a memory, configured to store a computer program; and
a processor, configured to invoke the computer program from the memory and run the computer program, so that a device on which the chip system is mounted performs the method according to any one of claims 1 to 12.

17. A computer program product, comprising a computer program, wherein when the computer program is executed by a communication apparatus, the method according to any one of claims 1 to 12 is implemented.

18. A computer-readable storage medium, wherein the storage medium stores a computer program or instructions, and when the computer program or the instructions are executed by a communication apparatus, the method according to any one of claims 1 to 12 is implemented.
